# EUROPEAN PATENT SPECIFICATION

(11) **EP 3 429 815 B1**
(45) Date of publication and mention of the grant of the patent: **14.04.2021**
(21) Application number: 17719330.7
(22) Date of filing: 14.03.2017
(51) Int. Cl.: B29C 33/38, B29C 33/40, B29C 33/56, B29C 44/56, B29C 51/16, B29C 51/30

(54) **METHOD FOR FAST PRODUCTION OF MOULDS**
VERFAHREN ZUR SCHNELLEN HERSTELLUNG VON FORMWERKZEUGEN
PROCÉDÉ POUR LA PRODUCTION RAPIDE DE MOULES

(30) Priority: 14.03.2016 IT UA20161637
(43) Date of publication of application: 23.01.2019
(73) Proprietor: Politecnico di Milano, 20133 Milano (IT)
(72) Inventor: RUTTICO, Pierpaolo, 23010 Albosaggia (SO) (IT)
(74) Representative: Baroni, Matteo
(86) International application number: PCT/IB2017/051461
(87) International publication number: WO 2017/158503

(56) References cited:
- WO-A2-2008/141644
- FR-A1- 2 567 799
- FR-A1- 2 738 522
- US-A- 5 098 059
- US-A1- 2007 216 064
- Pedro Filipe Martins ET AL: "Expanding the Material Possibilities of Lightweight Prefabrication in Concrete Through Robotic Hot-Wire Cutting Form, Texture and Composition", , 18 September 2015 (2015-09-18), XP055322426, Retrieved from the Internet: URL:http://papers.cumincad.org/data/works/ att/ecaade2015_302.content.pdf [retrieved on 2016-11-23]
- Martin Kaftan ET AL: "ROBOTIC FABRICATION OF MODULAR FORMWORK An innovative approach to formwork fabrication for non-standard concrete structures", , 1 May 2013 (2013-05-01), XP055322401, Retrieved from the Internet: URL:http://papers.cumincad.org/data/works/ att/caadria2013_260.content.pdf [retrieved on 2016-11-23]

## Description

### [FIELD OF THE INVENTION]

The present invention relates to a method for mould production.

### [PRIOR ART]

As is known, mould production requires the production of shaped shells into which fluidic material is then injected which, as it solidifies, takes the shape imposed by the inner surface of the shells.

One of the main aspects related to this technical field concerns the materials used for the moulds and the methods employed for giving the moulds the desired shape. With the latest technologies, moulds are made by numerically controlled milling of very dense materials, such as, for example, polyurethane, wood, aluminium, etc. Mechanical removal of material by milling requires very long processing times, and the materials typically employed have mechanical characteristics that make milling the only possible processing method.

Document FR 2 738 522 A1 discloses thermoforming of composite parts wherein the vacuum is drawn through a porous material at the time of forming sheets or films of thermoplastics on a vacuum forming mould.

Document US 5,098,059 discloses an assembly comprising a foam piece adapted for use in concrete casting, the foam piece having a front surface, a back surface, and edges, the assembly further comprising a flexible, non-permeable plastic film surrounding the foam piece.

Document WO2008141644 discloses a method and formwork for casting concrete or concrete like elements where said elements may have an amorphous shape, wherein the method comprises the following steps: in a block of formable material having a size larger than the element to be cast, a model of the element is cut out, thereby creating an inner formwork; an outer load bearing support structure having an inner size corresponding to the outer dimensions of the block is created; the parts of the block not representing the model are arranged in the interior of the load bearing support structure, thereby creating a cavity corresponding to the model; optionally reinforcement is arranged in the cavity; fresh concrete or other concrete like material is poured into the cavity and al- lowed to cure; the outer load bearing support structure and the inner formwork are removed.

### [OBJECTS AND SUMMARY OF THE INVENTION]

It is one object of the present invention to provide a method for mould production that ensures fast execution without however impairing the mechanical characteristics of the mould thus obtained.

It is a further object of the present invention to provide a method for mould production that allows manufacturing moulds having very different shapes without implying any particular complications in the production method.

These and other objects of the present invention are achieved through a method for mould production incorporating the features set out in the appended claims, which are an integral part of the present description.

A general idea at the basis of the present invention is to provide a method for mould production wherein an appropriately shaped polystyrene core is coated with plastic material by means of a thermoforming operation.

In this way it is possible to obtain a mould, a mould part or a structure that can be used for shaping an additional layer of thermoformable thermoplastic material; the later can then be used as an actual mould.

The present invention relates to a method for mould production, which comprises:
- preparing a core made of polystyrene;
- shaping said core, thereby obtaining a shaped core;
- executing a first thermoforming operation to coat said shaped core with a first thermoformable thermoplastic material, thereby obtaining a coated structure.

Said method further comprises:
- executing an additional thermoforming operation to coat said coated structure with an additional thermoformable thermoplastic material, thereby obtaining a shaped structure formed by said additional thermoformable thermoplastic material;
- executing a step of separating said coated structure from said shaped structure;
wherein said shaped structure forms a mould.

Preferably, said core is made of extruded polystyrene.

Preferably, the step of shaping said core is carried out by hot forming.

Preferably, the step of shaping said core is carried out by means of at least one of: a hot wire; a hot knife; a heated shaped element for cutting and/or carving polystyrene.

Preferably, the step of shaping said core is carried out by a numerical control machine, in particular equipped with at least one robotized arm, and/or by a dedicated numerical control machine, preferably based on delta robot technology.

Preferably, said first and/or additional thermoformable thermoplastic materials comprise one or more of: polystyrene (PS); expanded polystyrene (EPS); biaxially oriented polystyrene (BOPS); acrylonitrile-butadiene-styrene (ABS); polyvinylchloride (PVC); polyethylene terephthalate (PET); polypropylene (PP); polycarbonate (PC); mixed compounds; high-density polyethylene (HDPE); polymethylmethacrylate (PMMA); polyactic acid (PLA); biodegradable and compostable materials.

Other objects and advantages of the present invention will become more apparent in the light of the following detailed description and of the dependent claims, which define some preferred and advantageous embodiments of the present invention.

### [BRIEF DESCRIPTION OF THE DRAWINGS]

Some preferred and advantageous embodiments of the present invention will now be described by way of non-limiting example with reference to the annexed drawings, wherein:
- Figure 1 is a schematic perspective view of an initial element to be subjected to the method of the invention, inside of which a theoretical profile has been drawn which represents a first mould to be obtained.
- Figure 2 is a schematic sectional view of the element of Figure 1.
- Figures 3a-3d schematically show the steps of making and using the mould illustrated in Figure 1, according to an example which is not part of the present invention.
- Figures 4a-4e schematically show the steps of making and using, according to the present invention, a mould which is similar in shape to the mould shown in Figure 1.
- Figure 5 is a schematic perspective view of an initial element, inside of which a theoretical profile has been drawn which represents a second mould to be obtained according to a further example which is not part of the present invention.
- Figure 6 is a schematic sectional view of the element of Figure 5.
- Figures 7a-7e schematically show the steps of making and using the mould illustrated in Figure 5, according to said further example.

In the various drawings, the same reference numerals are used to designate similar components, materials or functions.

### [DETAILED DESCRIPTION OF THE INVENTION]

The execution of the method according to the invention requires, first of all, preparing a first core 10 made of polystyrene.

Preferably, the first core 10 is made of extruded polystyrene (XPS).

The first core may have, for example, a substantially parallelepiped shape. However, the first core 10 may have other shapes as well.

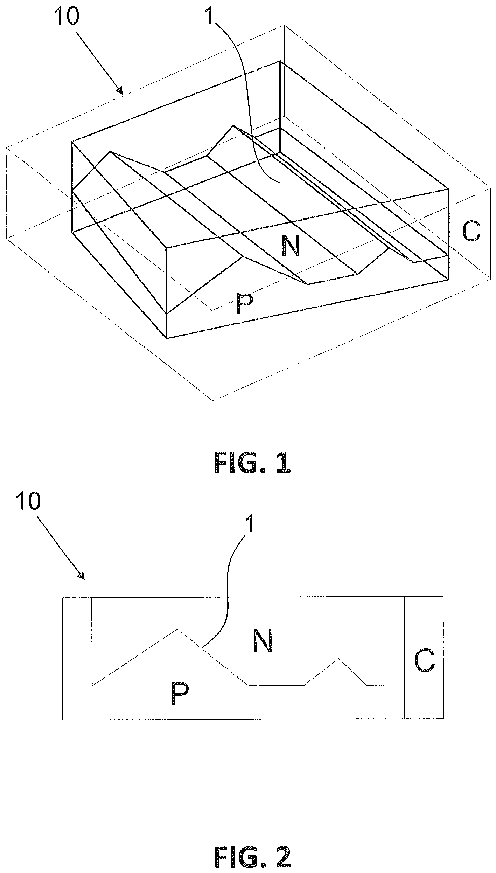

Figure 1 schematically shows the first core 10, which has a parallelepiped shape.

Figure 1 also shows the profile of a mould 1 that can be made by using the method according to the invention.

Figure 2 schematically shows a cross-section of the first core 10, while also illustrating the corresponding sectional profile of the mould 1.

The first core 10 is processed in such a way as to give it the desired shape.

As will become more apparent below, "N" indicates the "negative" of the product to be manufactured by means of the mould 1, "P" indicates the "positive" of the product to be manufactured by means of the mould 1, and "C" indicates the confinement portion.

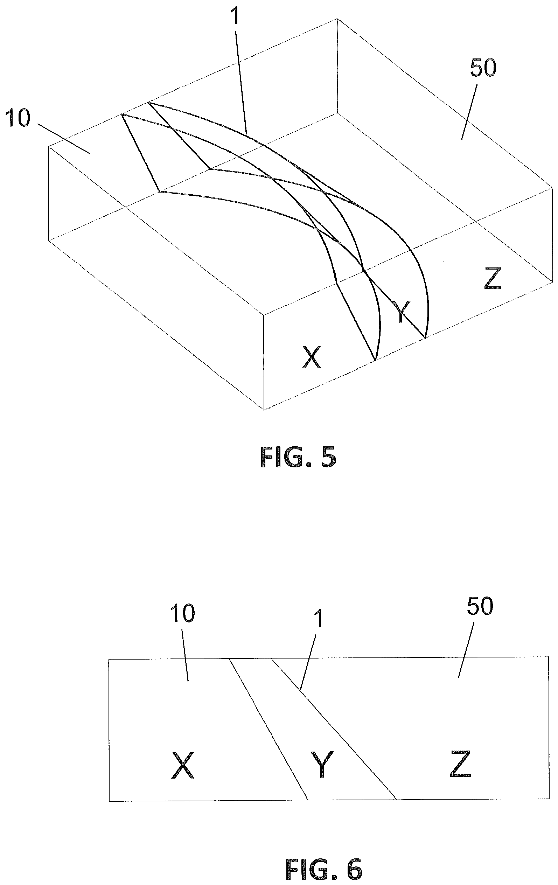

Figures 5 and 6 show a first core 10 as used in an example which is not part of the present invention.

The shaping of the first core 10 is preferably carried out by hot forming.

By way of example, the step of shaping the first core 10 is carried out by means of at least one of: a hot wire; a hot knife; a heated shaped element for cutting and/or carving polystyrene.

Preferably, the step of shaping the first core 10 is carried out by a numerical control machine, in particular equipped with at least one robotized arm.

In addition or as an alternative, a dedicated numerical control machine may be used, e.g. based on "delta robot" technology.

At the end of this process, a first shaped core 20 is obtained.

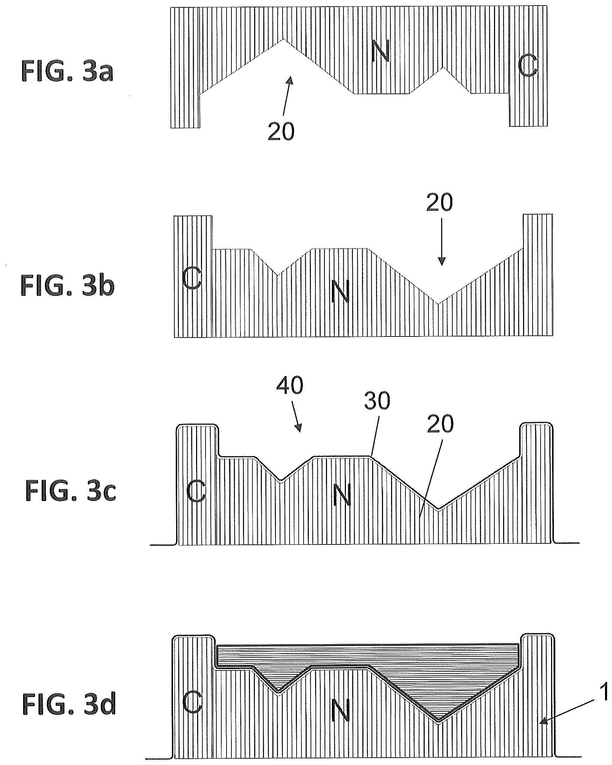

In the example (which is not part of the present invention) shown in Figure 3a, that part of the first core 10 which corresponds to part "P" has been removed by hot forming, thus leaving the parts "N" and "C".

In this case, therefore, the parts "N" and "C" form the first shaped core 20.

In the example schematized in Figures 3a-3d (which is not part of the present invention), the mould 1 has a "negative" shape, i.e. it is countershaped compared to the shape of the product to be manufactured by means of the mould 1.

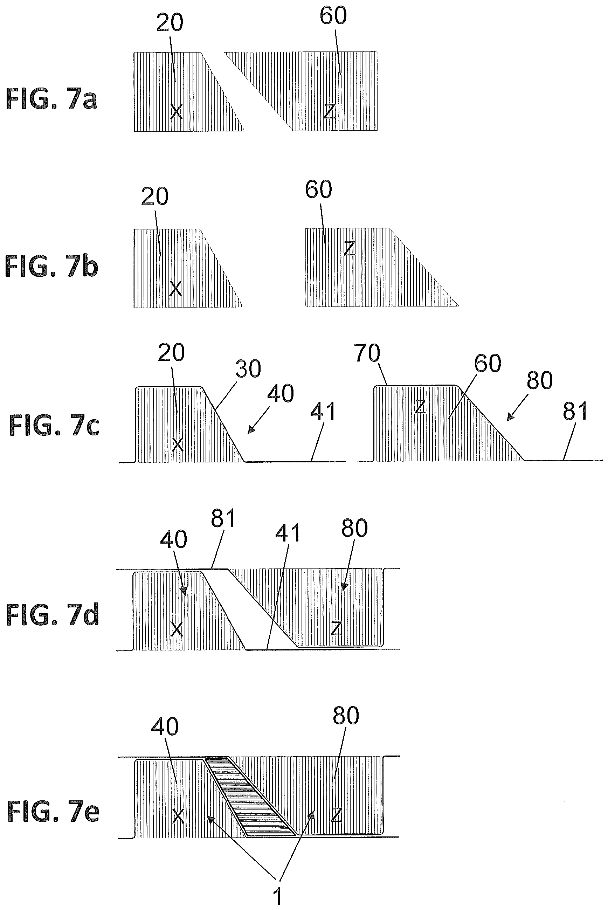

In a further example, which is not part of the present invention and is shown in Figures 7a-7e, the first shaped core 20 is generically designated as "X" simply to indicate the preparation of one of the two parts (X, Z) of the mould 1.

The first shaped core 20 is then preferably overturned (Figure 3b).

A first thermoforming operation is then carried out in order to coat, at least partly, the first shaped core 20 with a first thermoformable thermoplastic material 30, thereby obtaining a first coated structure 40 (Figures 3c, 7c).

The first thermoformable thermoplastic material 30 may comprise one or more of the following materials:
PS: polystyrene (and its derivatives EPS, BOPS, ABS)
PVC: polyvinylchloride
PET: polyethylene terephthalate (in its various formulations: PET-A, PET-G, PET-C)
PP: polypropylene
PC: polycarbonate

Mixed compounds
HDPE: high-density polyethylene
PMMA: polymethylmethacrylate
PLA: polyactic acid

Biodegradable and compostable materials.

Once the thermoforming step is over, a first coated structure 40 is obtained.

In one example, the first coated structure 40 can autonomously form a mould 1, as shown in Figure 3d.

In a further example (which is not part of the present invention), schematically shown in Figures 5-6, 7a-7e, the first coated structure 40 can be coupled to a second coated structure 80 made in a similar manner.

To this end, a second core 50 can be prepared, which may coincide or not with said first core 10, or be a part of it, or be substantially independent of it.

The second core 50 is made of polystyrene, preferably extruded polystyrene.

The second core 50 is shaped, thereby obtaining a second shaped core 60 (Figure 7a). The second shaped core 60 is identified as "Z" to indicate, as aforesaid, the preparation of the second part of the mould 1 to be coupled to the first part "X".

The designation "Y" refers to the shape of the objects that will be made by using the mould consisting of the first part "X" and the second part "Z".

The shaping the second core 50 is preferably carried out by hot forming, e.g. by means of at least one of: a hot wire; a hot knife; a heated shaped element for cutting and/or carving polystyrene.

Preferably, the same hot-forming tool is used for shaping both the first and the second cores 10, 50. Different tools may however be used.

Preferably, the step of shaping the second core 50 is carried out by a numerical control machine, in particular equipped with at least one robotized arm.

In the example shown in Figures 7a-7e, the second shaped core 60 is overturned, as illustrated in Figure 7b.

A second thermoforming operation is carried out on the second shaped core 60 by using a second thermoformable thermoplastic material 70, so as to obtain a second coated structure 80 (Figure 7c).

The second thermoformable thermoplastic material 70 may comprise one or more of the following materials:
PS: polystyrene (and its derivatives EPS, BOPS, ABS)
PVC: polyvinylchloride
PET: polyethylene terephthalate (in its various formulations: PET-A, PET-G, PET-C)
PP: polypropylene
PC: polycarbonate

Mixed compounds
HDPE: high-density polyethylene
PMMA: polymethylmethacrylate
PLA: polyactic acid

Biodegradable and compostable materials.

Preferably, the first and second thermoformable thermoplastic materials 30, 70 have substantially the same composition. They may however have different compositions. The first and second coated structures 40, 80 can then be coupled together in order to jointly create a mould 1, as schematically shown in Figures 7d-7e.

In this example, it is preferable that the first coated structure 40 and/or the second coated structure 80 have respective extensions 41, 81 made of the respective first and/or second thermoformable thermoplastic materials 30, 70.

The extensions 41, 81 extend away from the respective shaped cores 30, 70 without coating substantially any part of the respective shaped cores 30, 70.

The extensions 41, 81 advantageously define parts of the mould 1.

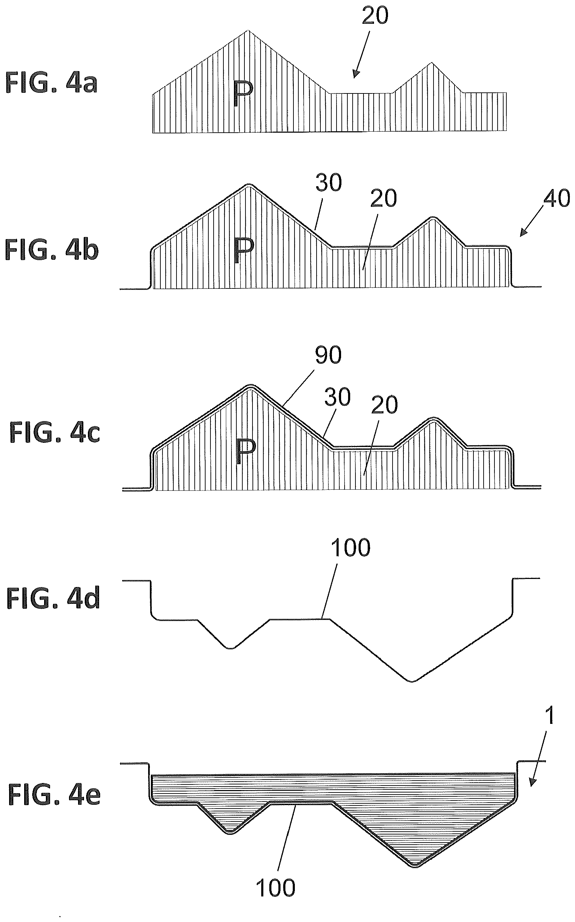

According to the invention (Figures 4a-4e), the first coated structure 40 is not used as a mould or as a part of a mould, but for making the actual mould, which is countershaped on the first coated structure 40.

In this embodiment, the first coated structure 20 is processed in such a way as to take the shape of the part "P", i.e. countershaped with respect to the actual conformation of the mould (Figure 4a).

The shape of the part "P" is, to a certain extent, similar to that of the product that needs to be manufactured by means of the mould. In particular, the Applicant has observed that the final product has, unlike part "P", smooth edges caused by partial melting of the mould as a consequence of the thermoforming process on polystyrene, and has a smaller volume. In fact, the jet of fluidic material into the mould will preferably be under the level of the height of the confinement walls (Fig.4e).

Figure 4b schematically shows the first thermoforming operation, wherein the first thermoformable thermoplastic material 30 is used for coating, at least partly, the first shaped core 20, thereby obtaining the first coated structure 40 shaped according to the part "P" shown in the preceding figure.

A third thermoforming operation is then carried out (Figure 4c), also referred to as "additional thermoforming operation", wherein a third thermoformable thermoplastic material 90, also referred to as "additional thermoformable thermoplastic material 90", is used for coating, at least partly, the first coated structure 40.

The third thermoformable thermoplastic material 90 may be one or more of the materials listed above with regard to the first and second thermoformable thermoplastic materials 30, 70.

Preferably, the third thermoformable thermoplastic material 90 has the same composition as the first thermoformable thermoplastic material 30 and/or the second thermoformable thermoplastic material 70. However, different compositions may also be used.

Once the third thermoforming operation is over, the third material 90 forms a shaped structure 100, which has the shape desired for the mould and can then be used to give the required shape to the fluidic material injected into the mould.

Figure 4d shows the shaped structure 100 separate from the first coated structure 40.

In practice, the shape of the first coated structure 40 is the same as that of the object that will have to be produced in series by means of the mould. Thus, the mould 1, defined by the shaped structure 100 (Figures 4d-4e), is made by thermoforming to subsequently obtain products having the same shape as the part "P".

In light of the above, the mould can therefore be obtained from the shaped structure 100 obtained by means of an additional thermoforming operation (third thermoforming operation) over the first coated structure 40.

It should be noted that, within the scope of the present invention, the mould can be formed by the shaped structure 100 combined with the second coated structure 80. In one embodiment of the invention, the first shaped core 20 and/or the second shaped core 60 are eliminated (e.g. by melting them), so that the first thermoformable thermoplastic material 30 and/or the second thermoformable thermoplastic material 70, after having been shaped on the respective shaped cores 20, 60 can constitute, whether individually or as an assembly, a mould suitable for the production of parts having a shape defined by the profile of the first shaped core 20 and/or of the second shaped core 60.

This solution proves particularly advantageous when the shape of the first and/or second shaped cores 20, 60 comprises undercuts that may prevent separating the first coated structure 40 and/or the second coated structure 80, if the latter are used for forming the shaped structure 100.

## Claims

1. Method for mould production, comprising:
- preparing a core (10) made of polystyrene;
- shaping said core (10), thereby obtaining a shaped core (20);
- executing a first thermoforming operation to coat said shaped core (20) with a first thermoformable thermoplastic material (30), thereby obtaining a coated structure (40);
**characterized in that** it further comprises:
- executing an additional thermoforming operation to coat said coated structure (40) with an additional thermoformable thermoplastic material (90), thereby obtaining a shaped structure (100) formed by said additional thermoformable thermoplastic material (90);
- executing a step of separating said coated structure (40) from said shaped structure (100);
wherein said shaped structure (100) forms a mould.

2. Method according to claim 1, wherein said core (10) is made of extruded polystyrene.

3. Method according to any one of the preceding claims, wherein the step of shaping said core (10) is carried out by hot forming.

4. Method according to claim 3, wherein the step of shaping said core (10) is carried out by means of at least one of: a hot wire; a hot knife; a heated shaped element for cutting and/or carving polystyrene.

5. Method according to any one of the preceding claims, wherein the step of shaping said core (10) is carried out by a numerical control machine, in particular equipped with at least one robotized arm, and/or by a dedicated numerical control machine, preferably based on delta robot technology.

6. Method according to any one of the preceding claims, wherein said first and/or additional thermoformable thermoplastic materials (30, 90) comprise one or more of: polystyrene (PS); expanded polystyrene (EPS); biaxially oriented polystyrene (BOPS); acrylonitrile-butadiene-styrene (ABS); polyvinylchloride (PVC); polyethylene terephthalate (PET); polypropylene (PP); polycarbonate (PC); mixed compounds; high-density polyethylene (HDPE); polymethylmethacrylate (PMMA); polyactic acid (PLA); biodegradable and compostable materials.

## Patentansprüche

1. Verfahren zum Herstellen von Formen, umfassend:
- Herstellen eines Kerns (10), der aus Polystyrol besteht;
- Formen des Kerns (10), wodurch ein geformter Kern (20) erhalten wird;
- Ausführen eines ersten Thermoformbetriebs, um den geformten Kern (20) mit einem ersten thermoformbaren Thermoplastmaterial (30) zu beschichten, wodurch eine beschichtete Struktur (40) erhalten wird;
**dadurch gekennzeichnet**, das diese weiter Folgendes umfasst:
- Ausführen eines zusätzlichen Thermoformbetriebs, um die beschichtete Struktur (40) mit einem zusätzlichen thermoformbaren Thermoplastmaterial (90) zu beschichten, wodurch eine geformte Struktur (100) erhalten wird, die durch das zusätzliche thermoformbare Thermoplastmaterial (90) geformt ist;
- Ausführen eines Schritts des Trennens der beschichteten Struktur (40) von der geformten Struktur (100);
wobei die geformte Struktur (100) eine Form bildet.

2. Verfahren nach Anspruch 1, wobei der Kern (10) aus extrudiertem Polystyrol besteht.

3. Verfahren nach einem der vorstehenden Ansprüche, wobei der Schritt des Formens des Kerns (10) durch Warmformgebung durchgeführt wird.

4. Verfahren nach Anspruch 3, wobei der Schritt des Formens des Kerns (10) mittels mindestens einem von: einem Hitzdraht; einem Hitzemesser; einem erhitzten geformten Element zum Schneiden und/oder Schnitzen von Polystyrol durchgeführt wird.

5. Verfahren nach einem der vorstehenden Ansprüche, wobei der Schritt des Formens des Kerns (10) durch eine CNC-Maschine durchgeführt wird, insbesondere eine, die mit mindestens einem Roboterarm ausgerüstet ist, und/oder durch eine dedizierte CNC-Maschine, die bevorzugt auf der Delta-Robotertechnologie beruht.

6. Verfahren nach einem der vorstehenden Ansprüche, wobei das erste und/oder das zusätzliche thermoformbare Thermoplastmaterial (30, 90) eines oder mehrere der Folgenden umfasst: Polystyrol (PS); geschäumtes Polystyrol (EPS); biaxial gestrecktes Polystyrol (BOPS); Acrylnitril-Butadien-Styrol (ABS); Polyvinylchlorid (PVC); Polyethylenterephthalat (PET); Polypropylen (PP); Polycarbonat (PC); gemischte Verbindungen; Polyethylen hoher Dichte (HDPE); Polymethylmethacrylat (PMMA); Polylactid (PLA); biologisch abbaubare und kompostierbare Materialien.

## Revendications

1. Procédé de production de moule, comprenant :
- la préparation d'un noyau (10) constitué de polystyrène ;
- la mise en forme dudit noyau (10), pour ainsi obtenir un noyau mis en forme (20) ;
- l'exécution d'une première opération de thermoformage pour revêtir ledit noyau formé (20) d'une première matière thermoplastique thermoformable (30), pour ainsi obtenir une structure revêtue (40) ;
**caractérisé en ce qu'**il comprend en outre :
- l'exécution d'une opération de thermoformage supplémentaire pour revêtir ladite structure revêtue (40) d'une matière thermoplastique thermoformable supplémentaire (90), pour ainsi obtenir une structure mise en forme (100) formée par ladite matière thermoplastique thermoformable supplémentaire (90) ;
- l'exécution d'une étape de séparation de ladite structure revêtue (40) de ladite structure mise en forme (100)
dans lequel ladite structure mise en forme (100) forme un moule.

2. Procédé selon la revendication 1, dans lequel ledit noyau (10) est constitué de polystyrène extrudé.

3. Procédé selon l'une quelconque des revendications précédentes, dans lequel l'étape de mise en forme dudit noyau (10) est réalisée par formage à chaud.

4. Procédé selon la revendication 3, dans lequel l'étape de mise en forme dudit noyau (10) est réalisée au moyen d'au moins l'un parmi : un fil chaud ; une lame chaude ; un élément mis en forme chauffé pour une coupe et/ou du sculptage de polystyrène.

5. Procédé selon l'une quelconque des revendications précédentes, dans lequel l'étape de mise en forme dudit noyau (10) est réalisée par une machine à commande numérique, en particulier équipée d'au moins un bras robotisé, et/ou par une machine à commande numérique dédiée, de préférence basée sur la technologie du robot delta.

6. Procédé selon l'une quelconque des revendications précédentes, dans lequel lesdites première matière thermoplastique thermoformable et/ou matière thermoplastique thermoformable supplémentaire (30, 90) comprennent un ou plusieurs parmi : polystyrène (PS) ; polystyrène expansé (EPS) ; polystyrène à orientation biaxiale (BOPS) ; acrylonitrile-butadiène-styrène (ABS) ; polychlorure de vinyle (PVC) ; polytéréphtalate d'éthylène (PET) ; polypropylène (PP) ; polycarbonate (PC) ; composés mixtes ; polyéthylène haute densité (HDPE) ; polyméthacrylate de méthyle (PMMA) ; polyacide lactique (PLA) ; matières biodégradables et compostables.
